# EUROPÄISCHE PATENTSCHRIFT

(11) **EP 0 472 668 B1**
(45) Veröffentlichungstag und Bekanntmachung des Hinweises auf die Patenterteilung: **03.08.1994**
(21) Anmeldenummer: 90917360.1
(22) Anmeldetag: 28.11.1990
(51) Int. Cl.: G01N 21/35, G01N 21/84, G08B 19/02

(54) **VERFAHREN ZUR ERMITTLUNG DES FAHRBAHNOBERFLÄCHENZUSTANDES**
PROCESS FOR DETERMINING THE CONDITION OF A ROAD SURFACE
PROCEDE POUR LA DETERMINATION DE L'ETAT DE SURFACE D'UNE CHAUSSEE

(30) Priorität: 15.03.1990 DE 4008280
(43) Veröffentlichungstag der Anmeldung: 04.03.1992
(73) Patentinhaber: TZN Forschungs- und Entwicklungszentrum Unterlüss GmbH, D-29345 Unterlüss (DE)
(72) Erfinder: SCHMITT, Klemens, D-5439 Rothenbach (DE); SCHAUBE, Walter, D-3155 Wipshausen (DE)
(74) Vertreter: Behrend, Rainer
(86) Internationale Anmeldenummer: EP9002035
(87) Internationale Veröffentlichungsnummer: WO9114170

(56) Entgegenhaltungen:
- EP-A- 0 005 696
- DE-A- 3 640 539
- DE-A- 3 816 416
- DE-B- 2 712 199
- DE-C- 2 912 645
- DE-C- 3 023 444
- GB-A- 2 158 939
- US-A- 4 274 091

## Beschreibung

Die Erfindung betrifft eine Vorrichtung zur berührungslosen Ermittlung des Fahrbahnoberflächenzustandes nach dem Oberbegriff des Anspruchs 1.

Es ist bekannt, Vorrichtungen zum Warnen vor Straßenglätte zu konstruieren, die die Reflexion von Strahlung ausnutzen. Dies kann zum einen durch Aussenden von Strahlung im Mikrowellenbereich unter Ausnutzen der unterschiedlichen Dielektrizitätskonstanten von Wasser und Eis geschehen (vgl. DE 29 12 645-A1), zum anderen aber auch durch die Reflexion von Infrarotstrahlung (IR-Strahlung) (vgl. DE 27 12 199-B1, EP 0005696-A1 und DE 30 23 444-A1).

DE 27 12 199-B1 und EP 0005696-A1 offenbaren eine Vorrichtung zum Warnen vor Straßenglätte, in der IR-Strahlung, die von zwei Laserdioden erzeugt wird, über IR-Lichtleiter in die Nähe der Fahrbahnoberfläche gesendet wird und von dort wiederum über IR-Lichtleiter in den gemeinsamen Empfänger geleitet wird.

Die Wellenlänge der Meßlichtimpulse liegt dabei in einem Absorptionsmaximum des Eises in den Wellenlängenbereichen 790 bis 810 nm, 890 bis 920 nm, 1020 bis 1060 nm oder 1260 bis 1290 nm. Die zweite Laserdiode strahlt Vergleichsstrahlimpulse ab, deren Wellenlänge in der Nähe der Absorptionsmaxima des Eises liegen, jedoch weder von Eis noch von Wasser bzw. Wasserdampf beeinflußt werden sollen.

DE 30 23 444-A1 offenbart eine Vorrichtung, die mittels eines Lichtwerfers IR-Strahlung im Bereich von 1400 bis 2500 nm, in dem Schnee ein geringeres Reflexionsvermögen als eine trockene Straßenoberfläche aufweist, auf die Fahrbahnoberfläche sendet. Für eine Straßenzustandsbeurteilung werden drei modifizierte Anordnungen vorgeschlagen:
Eine Geometrie geht von einer IR-Strahlungsquelle im Bereich von 1400 bis 2500 nm aus und benutzt zwei Sensoren im IR-Bereich, von denen der erste spiegelreflektiertes Licht und der zweite streureflektiertes Licht an der Oberfläche nachweist. Weiterhin wird die Temperatur mittels eines Thermometers gemessen.

Bei der zweiten Geometrie wird auf das Thermometer verzichtet und Licht im sichtbaren Spektralbereich und im IR-Bereich zwischen 1400 und 2500 nm wird auf die Oberfläche gestrahlt. Zwei Sensoren dienen zur Messung der reflektierten Strahlung im sichtbaren und im IR-Bereich.

Die dritte Geometrie benutzt zur Beurteilung ebenfalls eine Lichtquelle, die IR-Strahlung im Bereich von 1400 bis 2500 nm und sichtbares Licht im Bereich von 500 bis 1090 nm emittiert. Sie verfügt über einen IR-Streulichtdetektor, sowie einen Streulichtdetektor im sichtbaren Bereich, einen Spiegellichtdetektor im sichtbaren Bereich und eine Temperaturmeßeinrichtung.

Bei allen drei Geometrien werden über logische Schaltungen die mit den einzelnen Sensoren gemessenen Signale in einer Beurteilungseinheit mit gespeicherten Mustern von Referenzsignalen verglichen, um den Straßenzustand zu spezifizieren.

Die Ermittlung des Oberflächenzustandes (trocken, naß, vereist) einer Fahrbahn hat eine herausragende Bedeutung für die Verkehrssicherheit.

Es gibt bereits Sensorsysteme, die einen Kontakt des Sensors mit der zu untersuchenden Oberfläche erfordern, sowie berührungslos arbeitende Systeme, die auf einer Reflexionsmessung basieren. Die vorhandenen Lösungen sind konstruktiv aufwendig und teuer, und die Nachweissicherheit der Systeme ist begrenzt.

Die in DE 30 23 444-A1 offenbarten Vorrichtungen, in denen auch breitbandig eingestrahlte IR-Strahlung genutzt wird, sind bezüglich der benötigten Signalmustervergleichseinrichtungen sehr aufwendig. Insbesondere wird ein Vergleich mit zuvor abgespeicherten Signalmustern vorgenommen.

Die erste dort klassifizierte Ausführungsform, bei der IR-Strahlung im Wellenlängenbereich von 1400 bis 2500 nm benutzt wird, erlaubt eine Differenzierung zwischen einem nassen oder vereisten Straßenzustand nur durch eine zuätzliche Temperaturmessung. Die weiteren Ausführungsformen beinhalten neben Einstrahlung von Licht im IR-Bereich von 1400 bis 2500 nm auch Lichtanteile im sichtbaren Bereich von 500 bis 1090 nm, die als Streulicht und als spiegelreflektiertes Licht von separaten Detektoren nachgewiesen werden. Dadurch können u. U. Querempfindlichkeiten durch Sonnenlichteinstrahlung auftreten.

Die Vorrichtung gemäß DE 27 12 199-B1 und EP 0005696-A1 verwendet zwei gepulste Lichtquellen (Laserdioden), aber nur einen Detektor, so daß die Messung nur Sequentiell erfolgen kann.

Da die Wellenlängenselektion bereits vor dem Auftreffen auf die Oberfläche erfolgt und eine Filterung der Strahlung am Eingang des Detektors nicht erfolgt, können auch hier Störungen durch die Strahlung weiterer Lichtquellen auftreten. Dies soll durch Einstrahlen von Vergleichsstrahlimpulsen vermieden werden. Die Wellenlänge dieser Impulse ist aber so gewählt, daß die Reflexion weder durch Eis noch durch Wasser spezifisch beeinflußt wird. Dabei müßte es sich demnach um eine Wellenlänge handeln, bei der Eis und Wasser gleiches Reflexionsvermögen aufweisen, das zudem noch möglichst unabhängig ist von verschiedenen Schichtdicken. Die Wellenlänge der Meßlichtimpulse liegt in einem Absorptionsmaximum des Eises. Allerdings unterscheiden sich die Absorptionsmaxima von Eis und Wasser in dem vorzugsweise benutzten Wellenlängenbereich nur geringfügig, so daß eine ausreichende Wellenlängenstabilität der Meßlichtimpulse gewährleisten sein muß. Dies ist bei Laserdioden kritisch, da sie eine nicht unerhebliche Wellenlängendrift, in Abhängigkeit von der Temperatur, aufweisen. Für den Einsatz von Laserdioden ist demnach eine kostenintensive Temperaturstabilisierung notwendig.

In den Vorrichtungen nach EP 0005691-A1 und DE 27 12 199-B1 werden zusätzlich Filter in den Strahlengang gebracht. Dies hat bei starker Drift aber zur Folge, daß nur noch minimale bzw. keine Lichtintensität zur Reflexion an der Oberfläche verfügbar ist. Weiterhin kann es bei uneinheitlicher Drift der beiden Dioden zu einer Verfälschung der resultierenden Signalpegel kommen.

Der Erfindung liegt die Aufgabe zugrunde, eine konstruktiv einfache und kostengünstige Vorrichtung zu entwickeln, die berührungslos zwischen den drei Oberflächenzuständen naß, trocken und vereist mit hoher Nachweissicherheit differenziert.

Die Aufgabe wird erfindungsgemäß durch die Merkmale des kennzeichnenden Teiles des Anspruchs 1 gelöst.

Die Unteransprüche offenbaren besonders vorteilhafte Ausgestaltungen der Erfindung.

Im folgenden wird die Erfindung mit Hilfe von Ausführungsbeispielen und anhand von Figuren beschrieben.
- Fig.1, 1a und Fig.1b: zeigen Vorrichtungen zum Nachweis von reflektierter Strahlung im IR-Bereich, bestehend aus Lichtquelle, Empfänger und Signalverarbeitungseinheit;
- Fig. 2: zeigt das Reflexionsvermögen von Wasser in Abhängigkeit von der Wellenlänge im Bereich von 2000 bis 3200 nm bei Schichtdicken von 1,0 mm, 1,5 mm und 2,0 mm;
- Fig. 3: zeigt das Reflexionsvermögen von Eis in Abhängigkeit von der Wellenlänge im Bereich von 2000 bis 3200 nm bei Schichtdicken von 1,0 mm, 1,5 mm und 2,0 mm.

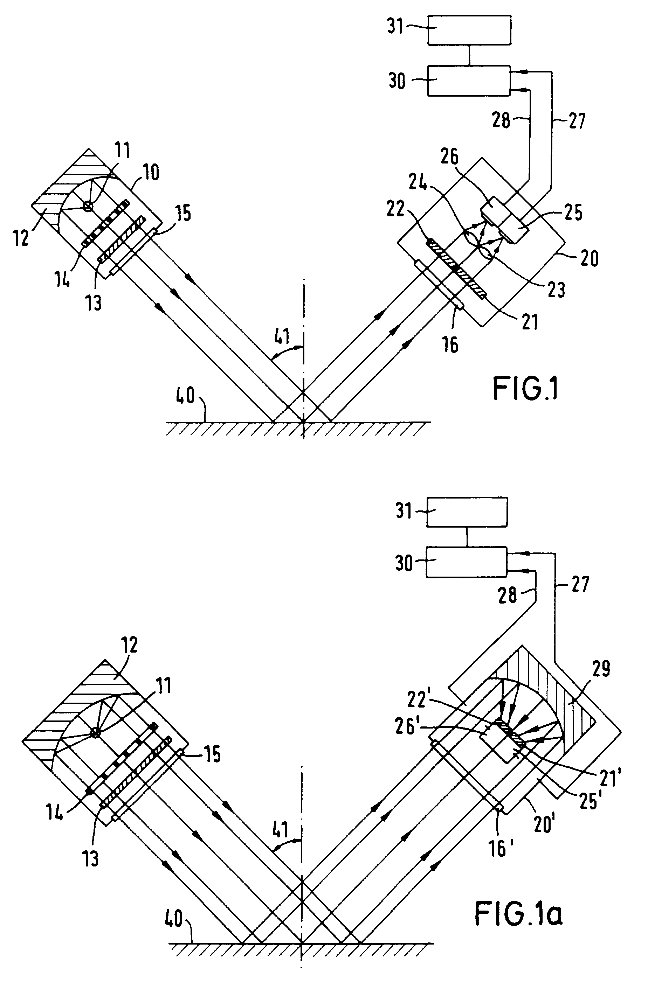

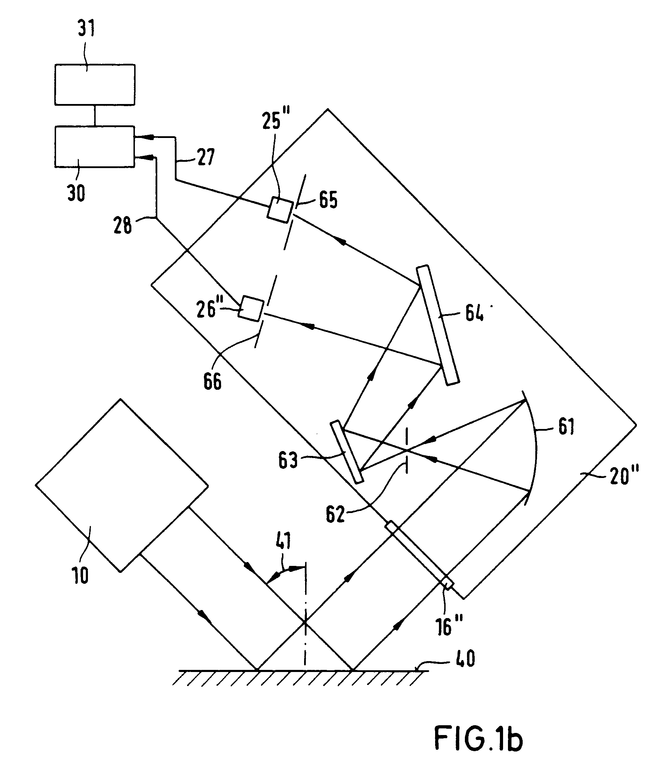

In Fig. 1 kennzeichnet 10 ein Lichtquellengehäuse, in dem sich eine IR-Strahlungsquelle 11 (z. B. eine Halogenlampe), ein gekrümmter Reflektorspiegel 12 und ein Modulator 14 befinden. Ein optisches Filter 13 (z. B. Langpaß-Kantenfilter oder Interferenzfilter) kann am Ausgang der Quelle angebracht werden. Um Verunreinigungen der optischen Bauelemente zu verhindern, wird das Lichtquellengehäuse 10 mit einem IR-Strahlung durchlässigen Fenster 15 verschlossen.

Der Empfänger 20 des Systems besteht aus zwei Interferenzfiltern 21, 22, zwei Linsen 23, 24 und zwei Detektoren 25, 26.
Auch der Empfänger 20 wird mit einem Fenster 16 versehen, um die Bauelemente beispielsweise gegen Verschmutzung durch Spritzwasser zu schützen.

Die Ausgänge der Detektoren 25, 26 sind über zwei Signalleitungen 27, 28 mit einem Signalprozessor 30 verbunden. Dieser ist wiederum mit einer Signalausgabeschnittstelle 31 verbunden.

Die Fig. 1a zeigt eine weitere Vorrichtung zum Nachweis der an der Fahrbahnoberfläche 40 reflektierten IR-Strahlung. Das dargestellte Lichtquellengehäuse 10 mit den entsprechenden Bauteilen entspricht dem in der Fig. 1. Der Empfänger 20' ist dahingehend modifiziert, daß bei dieser Anordnung auf die Linsen 23, 24 verzichtet wird. Die reflektierte IR-Strahlung fällt nach Eintritt durch das Fenster 16' auf einen fokussierenden Spiegel oder Reflektor 29, in dessen Brennpunkt sich die beiden Detektoren 25', 26' mit vorgeschalteten Interferenzfiltern 21', 22' befinden.

Die Figur 1b zeigt ein weiteres Ausführungsbeispiel zum wellenlängenselektiven Nachweis, der von der Fahrbahnoberfläche 40 reflektierten IR-Strahlung. Das Lichtquellengehäuse 10 mit den hier nicht dargestellten Bauteilen entspricht wiederum den Anordnungen gemäß der Figuren 1 und 1a. Der Empfänger 20'' weist ein Fenster 16'' und einen Parabolspiegel 61 auf, in dessen Brennpunkt eine Blende 62 angeordnet ist. Die Strahlung wird durch ein Reflektionsgitter 63 spektral zerlegt und über einen Fokussierspiegel 64 auf Blenden 65, 66 mit dahinterliegenden Sensoren 25'', 26'' fokussiert.

Zur weiteren Signalverarbeitung sind, wie bei den Anordnungen gemäß der Figuren 1 und 1a, der Signalprozessor 30 und die Signalausgabeschnittstelle 31 vorgesehen. Lichtquellengehäuse 10 und Empfänger 20, 20', 20'' sind unter einem Winkel α 41 gegen die Normale der zu untersuchenden Fahrbahnoberfläche 40 angeordnet. Zweckmäßig ist die Wahl kleiner Winkel (α < 30°). Größere Winkel sind möglich bei einer entsprechenden Berücksichtigung des sich mit dem Winkel α ändernden Wertes des Reflexionskoeffizienten.

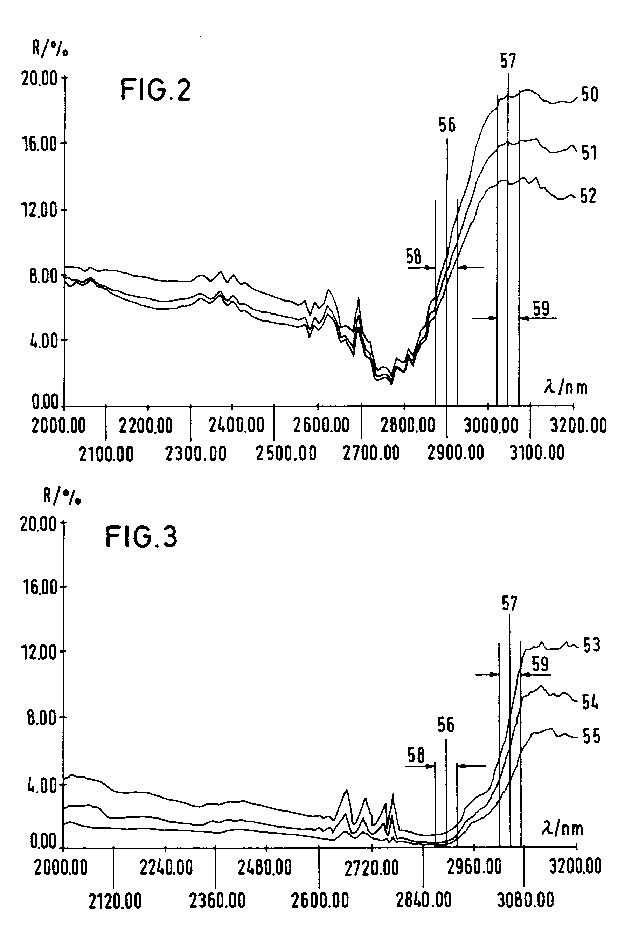

In Fig. 2 ist das Reflexionsvermögen R in % von Wasser gegen die Wellenlänge in nm aufgetragen. 50 kennzeichnet das Reflexionsvermögen von Wasser bei einer Schichtdicke von 2,0 mm, 51 und 52 entsprechen dem Reflexionsvermögen bei Schichtdicken von 1,5 bzw. 1,0 mm. 56 kennzeichnet die Zentralwellenlänge des Interferenzfilters 22, 22' bei 2900 nm. Die spektrale Breite 58 des Interferenzfilters 22, 22' beträgt 50 nm. 57 kennzeichnet die Zentralwellenlänge des Interferenzfilters 21, 21' bei 3050 nm, mit einer spektralen Breite 59 des Interferenzfilters 21, 21' von ebenfalls 50 nm.

Fig. 3 zeigt das Reflexionsvermögen R in % von Eis in Abhängigkeit von der Wellenlänge. 53, 54, 55 kennzeichnen Schichtdicken von 2,0 mm, 1,5 mm und 1,0 mm. Die eingezeichneten Zentralwellenlängen und spektralen Breiten entsprechen denen in Fig. 2.

Die von der Lichtquelle 11 emittierte breitbandige Strahlung wird über einen gekrümmten Reflektorspiegel 12 gebündelt und auf die zu untersuchende Fläche (z. B. Fahrbahnoberfläche 40) gelenkt.

Durch ein am Ausgang der Quelle 11 angebrachtes optisches Filter 13 (z. B. Langpaß-Kantenfilter oder Interferenzfilter) kann das Spektrum der Strahlung bereits vorselektiert werden. Hierdurch wird erreicht, daß die ausgeleuchtete Fahrbahnoberfläche 40 durch die Strahlung der Quelle 11 nicht unzulässig stark aufgeheizt wird.Die spektrale Vorselektion kann auch durch eine Spiegelbelegung (z. B. IR-reflektierend) erfolgen. Die Strahlung wird durch einen Modulator oder Chopper 14 zeitlich moduliert.

Die von der Fahrbahnoberfläche 40 reflektierte Strahlung wird im Empfänger 20 durch zwei Interferenzfilter 21, 22 spektral begrenzt und über zwei Linsen 23, 24 auf die Detektoren 25, 26 fokussiert. Alternativ kann die Filterung der Strahlung auch zwischen den Linsen 23, 24 und den Detektoren 25, 26 erfolgen. Dies hat wie bei der Anordnung in der Fig. 1a, in der die IR-Strahlung über einen gekrümmten Spiegel 29 auf die beiden Detektoren 25', 26' mit vorgeschalteten Interferenzfiltern 21', 22' fokussiert wird, den Vorteil, daß kleinere Interferenzfilter 21', 22' verwendet werden können und somit eine Kostenersparnis möglich ist. Anstelle des einen fokussierenden Reflektors 29 können wahlweise auch zwei separate, nicht dargestellte, fokussierende Reflektoren 29 kleineren Durchmessers angeordnet sein, in deren Brennpunkten die jeweiligen Interferenzfilter/Detektorkombinationen 21'/25' und 22'/26' angeordnet sind. Die Fixierung dieser Bauelemente kann mittels eines nicht dargestellten Haltebügels, der innen am Gehäuse des Empfängers 20' befestigt ist, erfolgen.

Die Interferenzfilter 21, 22; 21', 22' sind für zwei verschiedene Wellenlängen λ ᵢ und λ ⱼ transparent bei einer Bandbreite des Transmissionsbereiches von Δλ ᵢ bzw. Δλ j.

Bei der Anordnung gemäß der Figur 1b werden keine Interferenzfilter 21, 22; 21', 22' zur Wellenlängenselektion eingesetzt. Statt dessen wird das von der Fahrbahn 40 reflektierte Licht von dem Parabolspiegel 61 durch die in dessen Brennpunkt angeordnete Blende 62 auf ein Reflektionsgitter 63 gestrahlt. Das von dem Gitter 63 reflektierte Licht ist winkelabhängig wellenlängenselektiert und wird über den Spiegel 64 auf die Blenden 65, 66 fokussiert, hinter denen die Detektoren 25''; 26'' angeordnet sind.
Die Detektion der Wellenlängen λᵢ und λⱼ erfolgt bei diesem Ausführungsbeispiel durch die örtliche Anordnung der Blenden 55, 56 und der Detektoren 25'', 26''. Diese werden relativ zu dem Gitter 63 so angeordnet, daß nur Licht im Wellenlängenbereich Δλᵢ für die zentrale Wellenlänge λᵢ durch die Blende 65 auf den Detektor 25'' auftrifft bzw. im Bereich Δλⱼ durch die Blende 66 auf den Detektor 26''.

Gegenüber den in den Figuren 1 und 1a gezeigten Empfängern 20, 20' hat die Anordnung gemäß der Figur 1b den Vorteil, daß auf Interferenzfilter 21, 22; 21', 22' verzichtet werden kann. Die maximale Transmission von Interferenzfiltern beträgt üblicherweise lediglich 50 %. Die Verwendung eines Reflexionsgitters 63 und Spiegels 64 erlaubt demgegenüber eine Verdoppelung der Lichtausbeute, da deren Reflexionsverluste sehr gering sind, so daß vorteilhafterweise die Leistung der IR-Strahlungsquelle 11 halbiert werden kann, und somit die Betriebskosten gesenkt werden.

Die Detektoren 25, 26; 25', 26'; 25'', 26'' sind so ausgelegt, daß die Ausgangsspannungen Uᵢ und Uⱼ, proportional der bei den Wellenlängen λ ᵢ bzw. λ ⱼ empfangenen Strahlungsleistung sind. Die Signalspannungen Uᵢ, Uⱼ können entsprechend der Empfindlichkeitscharakteristiken der Detektoren 25, 26; 25', 26'; 25'', 26''und der spektralen Emissionscharakteristik der IR-Quelle 11 individuell verstärkt und anschließend dem Signalprozessor 30 zugeführt werden.

Erfindungsgemäß wird im Signalprozessor 30 das Verhältnis der Signalspannungen Uᵢ und Uⱼ, gebildet. Der Wert des Quotienten Uᵢ/Uⱼ hängt vom Zustand der bestrahlten Oberfläche ab.Der im Signalprozessor 30 ermittelte Spannungsquotient wird einem der drei Zustände trocken, naß, vereist, zugeordnet. Anschließend kann ein dem Zustand entsprechendes Signal erzeugt werden, das zur Signalausgabeschnittstelle 31 geleitet wird. Mit diesem Ausgangssignal läßt sich z. B. ein akustisches oder optisches Signal erzeugen, das dem Oberflächenzustand naß, trocken oder vereist, eindeutig entspricht.

Bei dem hier aufgeführten Beispiel werden die folgenden spektralen Werte zugrundegelegt:
λ ᵢ = 3050 nm,
λ ⱼ = 2900 nm,
Δλ ᵢ = Δλ ⱼ = 50 nm.

λ ᵢ und λ ⱼ liegen jeweils in der Mitte des 50 nm breiten Transmissionsbereiches.

Bei einer Kalibrierung des Systems, welche bei trockener Oberfläche einen Uᵢ/Uⱼ-Wert von etwa 1 ergibt, erhält man bei nassen Oberflächen verschiedener Wasserfilmdicken Uᵢ/Uⱼ-Werte von etwa 2,0 und bei vereisten Oberflächen verschiedener Eisschichtdicken Uᵢ/Uⱼ-Werte, die größer sind als 5 (zwischen 5 und 20).

Diese Zahlenwerte wurden aus den Reflexionsspektren Fig. 2 und Fig. 3 gewonnen, die die gemessene Reflexion bei nassen und vereisten Straßenproben mit verschiedenen Wasser- bzw. Eisschichtdicken zeigen. Der Winkel α 41 betrug bei den Messungen etwa 15°, als Lichtquelle wurde eine Halogenlampe verwendet.

Aus Fig. 2 und Fig. 3 ist zu entnehmen, daß die Steigungen der Reflexionskurven im Bereich von 2700 nm bis 3200 nm für Wasser und Eis verschieden sind. Die ansteigende Flanke der Kurve ist bei Eis um etwa 100 nm ins Langwellige verschoben. Messungen zeigen, daß weitere äquivalente Änderungen des Reflexionsfaktors innerhalb des Wellenlängenbereiches von 400 nm bis 3500 nm nicht vorhanden sind. Neben den hier angegebenen Zahlenwerten können anhand von Fig. 2 und Fig. 3 weitere geeignete λ ᵢ und λⱼ-Werte mit korrespondierenden Δλᵢ- und Δλⱼ-Werten gewählt werden, für die ebenfalls ein Uᵢ/Uⱼ-Signalwert resultiert, der eine eindeutige Zuordnung zu den Oberflächenzuständen trocken, naß und vereist ermöglicht.

Die Quotientenbildung der Signalspannungen Uᵢ und Uⱼ hat den Vorteil, daß das System auch dann zuverlässig arbeitet, wenn die Absolutwerte von Uᵢ und Uⱼ über einen großen Bereich variieren, wie es z. B. bei verschiedenen Eisschichtdicken der Fall ist (vgl.Fig. 3). Aus Fig. 2 und Fig. 3 folgt für den Wellenlängenbereich λ> 2700 nm, daß die Reflexionswerte bei λᵢ und λⱼ bei verschiedenen Eis- und Wasserschichtdicken nahezu um den gleichen Faktor zunehmen bzw. abnehmen.

Eine Variation in der Leistung der Lichtquelle 11, die beide Detektoren 25, 26; 25', 26'; 25'', 26'' gleichzeitig indirekt beleuchtet, sowie verschiedene Anordnungen von Strahlungsquelle 11 und Empfänger 20, 20',20'' werden ebenfalls durch die Bildung des Quotienten Uᵢ/Uⱼ weitgehend kompensiert.

Die schmalbandige Filterung der Strahlung erfolgt erst am Eingang der Detektoren 25, 26; 25', 26'; 25'', 26'' Dies bietet den Vorteil, daß ein Lichteinfall auf die Detektoren von zusätzlichen Strahlungsquellen (z. B. Sonneneinstrahlung) ebenfalls auf die Transmissionswellenlängen λᵢ und λⱼ der Interferenzfilter 21, 22; 21', 22' bzw. auf die winkelabhängig wellenlängenselektierte Strahlung beschränkt ist. Die Störung des Meßsystems durch diese Strahlung kann für Meßwellenlängen, die größer als 2700 nm sind, als gering angenommen werden.

Das hier für zwei Meßwellenlängen λᵢ und λⱼ beschriebene System läßt sich analog auch auf drei oder mehr Meßwellenlängen erweitern.

Somit hat man gegenüber dem Stand der Technik die Vorteile, daß Störungen durch Fremdlicht vernachlässigbar sind. Da die Meßwellenlängen in einem Wellenlängenbereich liegen, in dem das Reflexionsverhalten eine spektrale Abhängigkeit vom Oberflächenzustand zeigt, d. h. im Wellenlängenbereich von 2700 bis 3200 nm, kann anhand des gebildeten Quotienten der Signalspannungen Uᵢ und Uⱼ mit hoher Nachweissicherheit der Oberflächenzustand charakterisiert werden. Die Nachweissicherheit wird dabei nicht durch unterschiedliche Wasserschicht- bzw. Eisschicht- dicken beeinträchtigt.

Eine mögliche Eisbildung wird nicht durch eine Einstrahlung zu hoher Lichtintensität unterbunden, da die Strahlung durch Vorselektion durch ein optisches Filter 13 bereits abgeschwächt wird. Weiterhin besteht die Möglichkeit, das Licht nur in Intervallen auf die zu untersuchende Fahrbahnoberfläche 40 zu lenken (z. B. durch eine bewegliche Blende).

### Bezugszeichenliste

- 1O: Lichtquellengehäuse
- 11: IR-Strahlungsquelle
- 12: gekrümmter Reflektorspiegel
- 13: optisches Filter
- 14: Modulator
- 15: Fenster
- 16: Fenster
- 20: Empfänger
- 21: Interferenzfilter i
- 22: Interferenzfilter j
- 23: Linse i
- 24: Linse j
- 25: Detektor i
- 26: Detektor j
- 27: Signalleitung i
- 28: Signalleitung j
- 29: fokussierender Reflektor
- 30: Signalprozessor
- 31: Signalausgabeschnittstelle
- 40: Fahrbahnoberfläche
- 41: Einfallswinkel
- 50: Reflexionsvermögen Wasser 2 mm
- 51: Reflexionsvermögen Wasser 1,5 mm
- 52: Reflexionsvermögen Wasser 1 mm
- 53: Reflexionsvermögen Eis 2 mm
- 54: Reflexionsvermögen Eis 1,5 mm
- 55: Reflexionsvermögen Eis 1 mm
- 56: Zentralwellenlänge j
- 57: Zentralwellenlänge i
- 58: Spektrale Breite j
- 59: Spektrale Breite i
- 61: Parabolspiegel
- 62: Blende
- 63: Reflexionsgitter
- 64: Spiegel
- 65: Blende i
- 66: Blende j

## Patentansprüche

1. Verfahren zur berührungslosen Ermittlung des Fahrbahnoberflächenzustandes hinsichtlich Trockenheit, Nässe oder Vereisung durch Reflexionsmessung von Licht im Infrarotbereich, wobei die zu untersuchende Oberfläche mit einer breitbandigen Lichtquelle (11) beleuchtet wird, **gekennzeichnet durch** die Merkmale:
a) das reflektierte Licht wird selektiv in mindestens zwei Wellenlängenbereichen (58, 59) gleichzeitig gemessen, wobei die Nachweiswellenlängenbereiche (58, 59) eine spektrale Abhängigkeit vom Oberflächenzustand haben,
b) es wird das Verhältnis der in den einzelnen Spektralbereichen (58, 59) empfangenen Leistungen gebildet, und
c) die beiden Nachweiswellenlängenbereiche (58, 59) werden so gewählt, daß das Verhältnis der Signalspannungen für eine nasse Oberfläche, unabhängig von der Schichtdicke des Wasserfilms in einem bestimmten Wertebereich liegt, und für eine vereiste Oberfläche ein Verhältnis vorliegt, das mindestens doppelt so groß ist, wie das Verhältnis für eine nasse Oberfläche.

2. Verfahren nach Anspruch 1, **dadurch gekennzeichnet**, daß die schmalbandigen Nachweiswellenlängenbereiche (58, 59) des Empfängers (20, 20', 20'') im Spektralbereich von 2700 nm bis 3200 nm liegen.

3. Verfahren nach Anspruch 1 oder 2, **dadurch gekennzeichnet**, daß die breitbandige Lichtquelle (11) mit einem vorgeschalteten Modulator (14) versehen wird und ein Empfänger (20, 20') mehrere Sensoren (25, 26; 25', 26') und Interferenzfilter (21, 22; 21', 22') aufweist, die in jeweils unterschiedlichen Wellenlängenbereichen ihre maximale Transmission aufweisen.

4. Verfahren nach Anspruch 1 oder 2, **dadurch gekennzeichnet**, daß das reflektierte Licht in dem Empfänger (20'') über ein Reflexionsgitter (63) winkelabhängig wellenlängenselektiert nachgewiesen wird.

5. Verfahren nach Anspruch 4 **dadurch gekennzeichnet**, daß zum wellenlängenselektiven Nachweis das von der Fahrbahn (40) reflektierte Licht über einen Parabolspiegel (61) durch eine sich in dessen Brennpunkt befindliche Blende (62) auf das Reflexionsgitter (63) reflektiert wird und die von dem Gitter (63) winkelabhängig wellenlängenselektierte Strahlung über einen Spiegel (64) auf Blenden (65, 66) mit Sensoren (25'', 26'') fokussiert wird.

6. Verfahren nach einem der Ansprüche 1 bis 4, **dadurch gekennzeichnet**, daß ein Signalprozessor (30) hinter den Empfänger (20, 20', 20'') geschaltet wird, zur Quotientenbildung der Signalspannungen.

## Claims

1. Process for contactlessly determining the condition of a road surface as regards dryness, wetness or icing by measuring the reflection of light in the infrared range, wherein the surface to be examined is illuminated with a broad band light source (11), characterised by the following features:
(a) the reflected light is measured selectively in at least two wavelength ranges (58,59), the detection wavelength ranges (58,59) being spectrally dependent on the condition of the surface,
(b) the ratio between the received signals in the individual spectral ranges (58,59) is formed, and
(c) the two detection wavelength ranges (58,59) are selected to ensure that the ratio of the signal voltages for a wet surface is within a certain range of values regardless of the layer thickness of the film of water and that for an icy surface a ratio prevails which is at least twice as great as the ratio for a wet surface.

2. Process in accordance with Claim 1, characterised by the fact that the narrow band detection wavelength ranges (58,59) of the receiver (20,20',20'') are in the spectral range 2700 to 3200 nm.

3. Process in accordance with Claim 1 or 2, characterised by the fact that the broad band light source (11) is provided with a series connected modulator (14) and that a receiver (20,20') has a number of sensors (25,26; 25',26') and interference filters (21,22; 21',22') which each have their maximum transmission in a different wavelength range.

4. Process in accordance with Claim 1 or 2, characterised by the fact that the reflected light in the receiver (20'') is detected via a reflection grating (63) in a manner wherein the wavelength is selected according to the reflected angle.

5. Process in accordance with Claim 4, characterised by the fact that for the detection according to the wavelength the light reflected from the road surface (40) is reflected via a parabolic mirror (61) through a diaphragm (62) situated at the focal point of the latter onto the reflection grating (63) and that the radiation selected by the grating (63) according to wavelength as defined by the angle is focused via a mirror (64) onto diaphragms (65,66) with sensors (25'',26'').

6. Process in accordance with any one of Claims 1 to 4, characterised by the fact that a signal processor (30) is connected after the receiver (20,20',20'') for the purpose of forming the quotient of the signal voltages.

## Revendications

1. Procédé de détermination sans contact de l'état de surface d'une chaussée concernant la sécheresse, l'humidité ou le verglas par mesure de la réflexion de lumière dans l'infrarouge, dans lequel la surface à examiner est éclairée au moyen d'une source lumineuse (11) à bande large, caractérisé par les caractéristiques suivantes :
a) la lumière réfléchie est mesurée simultanément de manière sélective dans au moins deux gammes de longueurs d'ondes (58, 59), les gammes de longueurs d'ondes d'indication (58, 59) ayant une dépendance spectrale à l'égard de l'état de surface,
b) il est formé le rapport des puissances reçues dans les différentes gammes spectrales (58, 59) et
c) les deux gammes de longueurs d'ondes d'indication (58, 59) sont choisies de manière que le rapport des tensions des signaux pour une surface mouillée se situe dans une plage de valeurs déterminée, indépendamment de l'épaisseur de la couche du film d'eau, et que pour une surface verglacée on ait un rapport qui soit au moins le double du rapport pour une surface mouillée.

2. Procédé selon la revendication 1, caractérisé en ce que les gammes de longueurs d'ondes d'indication (58, 549) à bande étroite du récepteur (20, 20', 20'') se situent dans la gamme spectrale de 2 700 nm à 3 200 nm.

3. Procédé selon les revendications 1 ou 2, caractérisé en ce que la source lumineuse (11) à bande large est dotée d'un modulateur (14) situé en amont et un récepteur (20, 20') comporte plusieurs capteurs (25, 26 ; 25', 26') et des filtres à interférence (21, 22 21', 22') qui présentent chacun leur transmission maximale dans des gammes de longueurs d'ondes différentes.

4. Procédé selon les revendications 1 ou 2, caractérisé en ce que la lumière réfléchie dans le récepteur (20'') est décelée par une grille de réflexion (63) en fonction de l'angle et de manière sélective suivant la longueur d'onde.

5. Procédé selon la revendication 4, caractérisé en ce que pour le décèlement sélectif suivant la longueur d'onde la lumière réfléchie par la chaussée (40) est réfléchie sur la grille de réflexion (63), par l'intermédiaire d'un miroir parabolique (61), par un diaphragme (62) se trouvant en son foyer et le rayonnement sélectionné par la grille (63) en fonction de l'angle et suivant la longueur d'onde, est focalisé par un miroir (64) sur des diaphragmes (65, 66) avec capteurs (25'', 26'').

6. Procédé selon l'une des revendications 1 à 4, caractérisé en ce qu'un processeur de signaux (30) est monté derrière le récepteur (20, 20', 20'') en vue de former le quotient des tensions des signaux.
